# FASCICULE DE BREVET EUROPEEN

(11) **EP 3 314 155 B1**
(45) Date de publication et mention de la délivrance du brevet: **15.05.2019**
(21) Numéro de dépôt: 16745785.2
(22) Date de dépôt: 29.06.2016
(51) Int. Cl.: F16L 11/08, F16L 33/00, F16L 33/01

(54) **MÉTHODE DE MONTAGE D'EMBOUT DE CONDUITE FLEXIBLE**
VERFAHREN ZUM EINBAU EINES ENDSTÜCKS EINES FLEXIBLEN ROHRS
METHOD FOR FITTING A FLEXIBLE PIPE END-FITTING

(30) Priorité: 29.06.2015 FR 1556078
(43) Date de publication de la demande: 02.05.2018
(73) Titulaire: Technip France, 92400 Courbevoie (FR)
(72) Inventeur: HANONGE, Didier, 76190 Allouville-Bellefosse (FR); FELIX-HENRY, Antoine, 76000 Rouen (FR); LE BLAN, Benjamin, 59491 Villeneuve d'Ascq (FR); TOSTE, Fernando Leitao Gonçalves, 20540-140 Rio de Janeiro (BR)
(74) Mandataire: Fédit-Loriot
(86) Numéro de dépôt international: PCT/FR2016/051611
(87) Numéro de publication internationale: WO 2017/001774

(56) Documents cités:
- FR-A- 1 400 442
- FR-A1- 2 754 585
- FR-A1- 2 955 371
- FR-A1- 3 007 494

## Description

La présente invention se rapporte à une méthode de montage d'embout de conduite flexible pour pouvoir connecter des conduites flexibles sous-marines destinées notamment au transport d'hydrocarbures.

Un domaine d'application envisagé de ces conduites flexibles sous-marines est notamment, mais non exclusivement, celui des conduites flexibles dites « dynamiques », lesquelles sont mises en oeuvre dans des milieux marins à fort courant, ou bien près de la surface. Elles subissent par conséquent de fortes contraintes mécaniques lorsqu'elles sont en service.

Ces conduites flexibles sous-marines sont usuellement de type « non liée » et elles sont réalisées conformément aux documents normatifs API 17J (Spécification for Unbonded Flexible Pipe) et API RP 17B (Recommended Practice for Flexible Pipe) établi par l'American Petroleum Institute.

Elles comprennent au moins une gaine interne étanche à l'hydrocarbure véhiculé, au moins une première couche de renfort de pression faite d'au moins un fil métallique enroulé à pas court pour reprendre les contraintes radiales, au moins une deuxième couche de renfort de tension, faite d'une pluralité d'armures enroulées hélicoïdalement a pas long pour reprendre les tensions axiales qui s'exercent sur la conduite, et éventuellement, une gaine de protection externe.

Les embouts destinés à être montés à l'extrémité des conduites flexibles sous-marines comprennent usuellement un manchon et un capot cylindrique venant coiffer coaxialement le manchon en formant une chambre annulaire entre eux.

On emmanche la gaine interne et la première couche de renfort de pression à l'intérieur du manchon tandis qu'on vient conformer les armures de traction autour du manchon. Durant cette conformation, les armures sont décollées de la première couche de renfort de pression et courbées pour ensuite, être rabattues contre le manchon. Au surplus, leur extrémité libre est préférentiellement recourbée pour améliorer l'ancrage.

Puis, le manchon ainsi relié à la conduite est coiffé du capot cylindrique de manière à ce que les armures viennent s'étendre librement à l'intérieur de la chambre annulaire. La chambre annulaire est alors remplie d'une résine synthétique réticulable, par exemple à base d'époxyde, qui vient noyer les armures. Les armures prisonnières de la résine solidifiée sont alors solidement ancrées dans la chambre annulaire, et partant, solidaires de l'embout et du capot. En effet, les armures sont notamment retenues par frottement à l'intérieur de la résine solidifiée. On pourra notamment se référer au document EP 1 336 061, lequel décrit un tel procédé de montage.

Néanmoins, un point névralgique de ces conduites se situe entre l'embout qui permet de les connecter à une installation marine ou sous-marine, et le corps de la conduite lui-même. En effet, les mouvements répétés du corps de la conduite par rapport à l'embout, tendent à diminuer la résistance mécanique des armures de traction au niveau de l'embout, cela pouvant conduire à une désolidarisation de la conduite et de l'embout.

Aussi, un problème qui se pose et que vise à résoudre la présente invention, est de fournir une méthode de montage qui permette d'éviter que l'embout ne se désolidarise de la conduite flexible sous-marine après une période de service.

Dans ce but, la présente invention présente une méthode de montage d'embout de conduite flexible sous-marine, du type comprenant les étapes suivantes : a) on fournit une conduite flexible sous-marine comprenant une structure tubulaire interne et une pluralité d'armures de traction enroulées en hélice à pas long autour de ladite structure tubulaire interne, ladite structure tubulaire interne présentant une extrémité libre ; b) on fournit un embout comprenant un manchon et un capot cylindrique destiné à venir coiffer coaxialement ledit manchon pour pouvoir ménager un espace annulaire entre ledit manchon et ledit capot cylindrique ; c) on emmanche ladite extrémité libre de ladite structure tubulaire interne à l'intérieur dudit manchon, tandis qu'on conforme lesdites armures de traction de manière à pouvoir venir les étendre autour dudit manchon ; et, d) on coiffe ledit manchon avec ledit capot pour pouvoir ancrer lesdites armures de traction à l'intérieur dudit espace annulaire. La méthode de montage comprend en outre, après l'étape c), une double étape de mise en tension longitudinale et de relâchement desdites armures de traction.

Ainsi, une caractéristique de l'invention réside dans la mise en lumière d'une défaillance des armures inconnue jusqu'à présent, leur rupture en fatigue au niveau de l'embout. En effet, lors de leur conformation, les armures sont soumises à des contraintes élevées où elles sont pliées et dépliées, et elles sont alors localement plastifiées. Aussi, les armures présentent dans les zones plastifiées des contraintes résiduelles. De la sorte, selon l'invention, on met les armures en tension pendant une période déterminée après qu'elles ont été plastifiées localement. Aussi, on ajoute des contraintes supplémentaires, ce qui a pour effet d'augmenter plus encore la plastification dans les zones déjà plastifiées. Puis on relâche les armures, et ce relâchement permet de relaxer les contraintes supplémentaires mais aussi les contraintes résiduelles en dessous de leur seuil de relâchement avant traction. Partant, les armures présenteront toujours une bonne élasticité et les niveaux de contraintes résiduelles dans les armures seront inférieurs à ceux qu'ils auraient été sans mise en tension. De la sorte, les armures résistent mieux à la fatigue et la durée de vie en exploitation, de la liaison de l'embout et de la conduite flexible sous-marine, est augmentée notablement.

En outre, comme on l'expliquera ci-après, les armures seront mises en tension longitudinale selon un effort supérieur à la traction que subiront les armures lorsque la conduite flexible sous-marine sera en service.

Selon un premier mode de mise en oeuvre de l'invention particulièrement avantageux, on met en oeuvre ladite double étape de mise en tension longitudinale et de relâchement, entre l'étape c) et l'étape d), c'est-à-dire, après avoir relié le manchon et la structure tubulaire interne et avoir conformé les armures de traction autour du manchon. Il est alors possible de mettre en tension chacune des armures indépendamment les unes des autres, ou bien par groupe. De la sorte, il est aisé d'exercer une tension longitudinale à une valeur déterminée pour chacune des armures.

Considérant l'ensemble des armures de la conduite flexible sous-marine pour une conduite de diamètre interne égale à 6", soit 15,24 cm, on exerce de préférence une tension longitudinale comprise entre 500 000 N et 17 500 000 N, soit sensiblement entre 50 t les 1750 t. En outre, pour des conduites flexibles dont le diamètre interne est compris entre 2", soit 5,08 cm et 20" soit 50,8 cm, la tension longitudinale à appliquer à l'ensemble des armures de la conduite est déterminée par proportionnalité et est fonction du diamètre et de la section totale des couches d'armures. Avantageusement, la tension longitudinale appliquée est comprise entre 800 000 N et 10 000 000 N, soit sensiblement entre 80 t 1000 t, et préférentiellement entre 1 000 000 N et 8 000 000 N, soit entre 100 t et 800 t.

En outre, les armures de traction présentent chacune une extrémité d'armure libre, et on saisit avantageusement chacune des extrémités d'armure libres pour pouvoir mettre en tension longitudinale lesdites armures de traction. Les extrémités des armures sont par exemple mises en prise dans des mors, pour pouvoir être saisies puis mises en tension.

De plus, chacune desdites extrémités d'armure libres s'étendant selon une direction axiale, en saillie de ladite extrémité libre de ladite structure tubulaire interne. Cette caractéristique permet, comme on l'expliquera ci-après, de pouvoir venir saisir les extrémités d'armure libres entre les mors, au risque de dénaturer les propriétés mécaniques de l'armure au niveau du serrage, puis de venir couper l'extrémité saisie, sans pour autant que l'armure soit trop courte pour réaliser l'ancrage. Autrement dit, une sur-longueur des armures est ménagée pour pouvoir réaliser aisément la mise en tension longitudinale.

Au surplus, et de façon avantageuse, on fournit en outre un collier de serrage, et on porte ledit collier de serrage autour de ladite pluralité d'armures de traction, en amont dudit manchon. Ainsi qu'on l'expliquera plus en détail dans la description qui va suivre, la pluralité d'armures est agencée en nappe cylindrique à courbe directrice circulaire autour de la structure tubulaire interne. Partant, on vient appliquer le collier de serrage sur la nappe cylindrique d'armure, et les armures sont alors décollées de la structure tubulaire interne à partir du collier de serrage.

Aussi, on fournit en outre, de façon particulièrement avantageuse, une bague d'appui et on monte ladite bague d'appui autour dudit manchon pour pouvoir recevoir en appui les armures de traction de ladite pluralité d'armures de traction. La bague d'appui peut demeurer dans le manchon ou bien constituer une pièce de calage pour la mise en tension des armures de traction et être retirée ensuite.

Selon un deuxième mode de mise en oeuvre de l'invention avantageux, on met en oeuvre ladite double étape de mise en tension longitudinale et de relâchement après l'étape d). Ainsi, on met en tension longitudinale les armures de traction après qu'elles ont été solidarisées au manchon. Autrement dit, on vient exercer axialement une traction sur l'embout dans un sens opposé à celui de l'emmanchement de l'extrémité libre de la structure tubulaire interne à l'intérieur du manchon, de manière à pouvoir mettre en tension simultanément toutes les armures de traction.

Selon un mode de réalisation particulièrement avantageux on met en prise ladite conduite flexible sous-marine et ledit embout et on exerce des efforts selon une direction longitudinale et en sens opposé sur ladite conduite flexible sous-marine et sur ledit embout pour pouvoir mettre en tension longitudinale lesdites armures de traction. Par exemple on amarre l'embout, typiquement à une distance comprise entre un mètre et dix mètres de l'embout, à une structure maintenue en position fixe et on enserre la conduite flexible sous-marine près de l'embout dans des jeux de chenilles permettant d'entraîner en translation et axialement la conduite flexible dans un sens opposé à la structure.

Dans un autre exemple, les jeux de chenilles sont remplacées par une bride de serrage (ou « clamp » en anglais).

Dans une variante de réalisation du mode ci-dessus, on met en tension les armures de traction de la conduite flexible sous-marine en longueur courante et plus particulièrement dans la zone située sous un limiteur de courbure tel qu'un raidisseur de courbure ou un réducteur de courbure. En effet, les armures de tractions sont dans cette zone soumises à des variations de courbures causant un surplus de sollicitations ayant pour effet d'accélérer le vieillissement de la conduite en fatigue.

A cet effet, on met en prise ladite conduite flexible et ledit embout et on exerce des efforts selon une direction longitudinale et en sens opposé sur ladite conduite et sur ledit embout pour pouvoir mettre en tension longitudinale lesdites armures de traction. Par exemple on amarre l'embout à une structure maintenue en position fixe et on enserre la conduite flexible, typiquement à une distance comprise entre 1 mètre et 50 mètres de l'embout, dans des jeux de chenilles ou dans une bride de serrage permettant d'entraîner en translation et axialement la conduite flexible dans un sens opposé à la structure.

Conformément à une variante de réalisation de l'invention on met en outre un fluide sous pression à l'intérieur de ladite conduite flexible sous-marine. Par exemple, on porte le fluide sous pression à l'intérieur de la conduite flexible à une valeur de une fois et demie la pression de conception. De la sorte, on améliore plus encore la relaxation des contraintes. En outre, on simule ainsi le comportement réel de la conduite flexible sous-marine en service.

En outre, et de façon préférée, on met en tension longitudinale les armures de traction à une valeur de tension voisine de la limite d'élasticité des armures de traction, et ce, quel que soit le mode de réalisation. Les armures de traction sont portées à une valeur de tension comprise entre 0,5 et une fois leur limite d'élasticité. De préférence, elles sont portées à une valeur de tension de relaxation optimale comprise entre 0,8 et 0,9 fois leur limite d'élasticité.

Dans certaines applications, les armures de traction sont portées à une valeur de tension supérieure à leur limite d'élasticité.

Avantageusement, les armures de traction sont sollicitées en tension à une valeur supérieure à celle qu'elles seraient amenées à subir en service, aussi bien pour des efforts en tension que pour des efforts de pression interne.

D'autres particularités et avantages de l'invention ressortiront à la lecture de la description faite ci-après de modes de réalisation particuliers de l'invention, donnés à titre indicatif mais non limitatif, en référence aux dessins annexés sur lesquels :
- la Figure 1 est une vue schématique partielle en écorché d'une conduite flexible sous-marine conforme à l'invention;
- la Figure 2 est une vue schématique partielle en coupe hémi-axiale d'une conduite flexible sous-marine équipée d'un embout en cours de montage conformément à l'invention selon un premier mode de mise en oeuvre ;
- la Figure 3 est une vue schématique partielle en coupe hémi-axiale d'une conduite flexible sous-marine et équipée d'un embout monté ;
- la Figure 4 est une vue schématique partielle en élévation de côté illustrant un deuxième mode de mise en oeuvre de l'invention ;
- la Figure 5 est un graphe représentant l'un des intérêts de l'invention ; et,
- la Figure 6 est une vue schématique partielle en élévation de côté illustrant une variante de réalisation du mode de mise en oeuvre de l'invention tel qu'illustré sur la Figure 4.

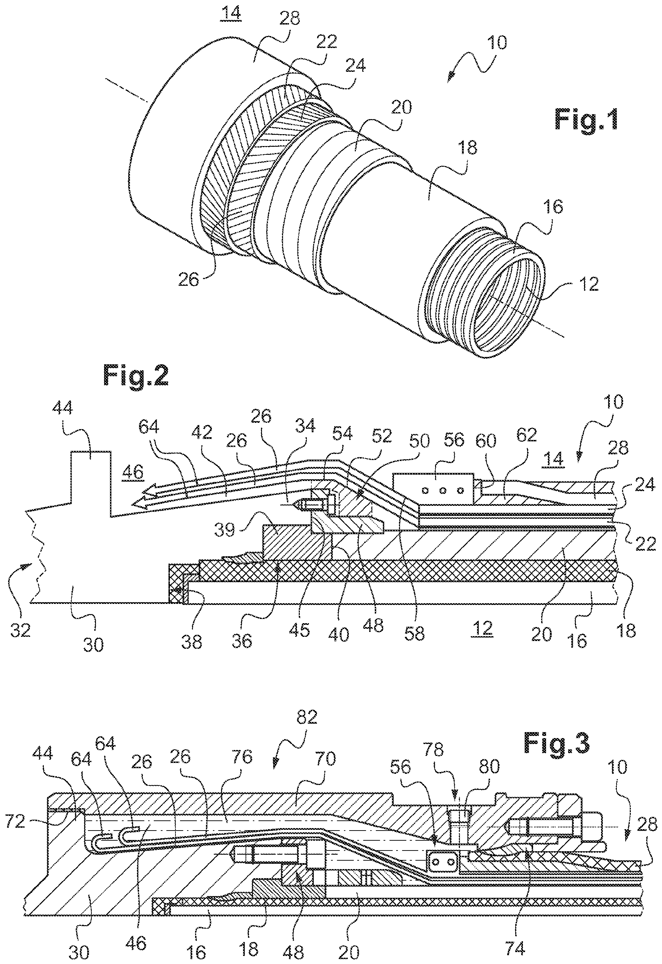

La Figure 1 illustre partiellement et en écorché une conduite flexible sous-marine 10 destinée au transport des hydrocarbures en milieu offshore. Elle présente, de l'intérieur 12 vers l'extérieur 14, une carcasse métallique 16 emmanchée dans une gaine étanche 18 faite d'un matériau polymère ; une voûte de pression 20 faite d'un fil de forme enroulé hélicoïdalement a pas à court pour former des spires jointives autour de la gaine étanche 18 ; deux nappes 22, 24 respectivement faites d'une pluralité d'armures de traction 26 enroulées hélicoïdalement a pas long autour de la voûte de pression 20 ; et une gaine étanche de protection 28 entourant les deux nappes 22, 24.

En variante, la conduite flexible 10 présente quatre nappes faites d'une pluralité d'armures de traction 26 enroulées hélicoïdalement à pas long autour de la voûte de pression 20.

Les armures de traction 26 de l'une 22 des deux nappes 22, 24 sont enroulées hélicoïdalement dans un sens opposé à la pluralité des armures de traction 26 de l'autre 24 des deux nappes 22, 24 de manière à pouvoir équilibrer les forces tangentielles qui apparaissent dans chacune de ses deux nappes 22, 24. En effet, les armures de traction 26 sont destinées à venir reprendre les efforts longitudinaux qui s'exercent sur la conduite flexible. Chacune des nappes 22, 24 peut comprendre, par exemple, plus de 40 armures. On comprend alors, que les armures soumises aux efforts de traction peuvent tendre à se rapprocher d'une ligne droite et ne pas conserver leur courbure suivant leur cercle osculateur.

Aussi, on comprend que les embouts de connexion vont devoir, outre assurer l'étanchéité avec la conduite flexible sous-marine, aussi, reprendre les efforts de traction qu'elle subit. Partant, les armures de traction 26 doivent être solidement amarrées sur les embouts.

On se reportera à présent sur la Figure 2 montrant partiellement et en coupe hémi-axiale, un manchon 30 et la conduite flexible sous-marine 10. On retrouve successivement, de l'intérieur 12 vers l'extérieur 14, d'une part la carcasse métallique 16, la gaine étanche 18 et la voûte de pression 20, constituant une structure tubulaire interne, et d'autre part les deux nappes 22, 24 et la gaine étanche de protection 28.

Avantageusement, l'enroulement d'une bande anti-usure est prévue entre la voûte de pression 20 et la première nappe 22 d'armures de traction d'une part et, entre la première nappe 22 et la deuxième nappe 24 d'armures de traction d'autre part. Aussi, on pourra prévoir de manière avantageuse l'enroulement d'au moins une bande de maintien par-dessus la nappe 24 d'armures de traction pour limiter le gonflement des nappes 22, 24 en cas d'effet de fond inverse.

Le manchon 30 également dénommé voûte, présente une partie avant de connexion 32 et une partie arrière 34 de liaison avec la conduite flexible 10. Le manchon 30 présente à l'intérieur et dans la partie arrière 34 une bague d'arrêt 39 présentant une face arrière 40 d'appui de la voûte de pression 20. Il y présente également, autour de la bague d'arrêt 39, un décrochement axial périphérique 45 présentant une arrête commune avec la paroi externe conique 42, et formant une surface d'appui. À l'opposé, le manchon 30 présente une paroi externe conique 42 dont le centre théorique est situé au-delà de la partie avant de connexion 32 à l'opposé de la partie arrière 34 de liaison. Il présente également une collerette 44 dans la partie de faible diamètre de la paroi externe conique 42. Ainsi, la collerette 44 et la paroi externe conique 42 délimite partiellement un logement 46.

La structure tubulaire interne comprenant la voûte de pression 20, la gaine étanche 18 et la carcasse 16 définissent une extrémité libre en escalier, laquelle est emmanchée à l'intérieur du manchon 30 dans sa partie arrière 34. Aussi, une bague de sertissage 48 est installée contre la surface d'appui ménagée par le décrochement axial périphérique 45, et elle s'étend en saillie de la bague d'arrêt 39 pour empêcher tout déplacement axial de la bague d'arrêt 39 et/ou de la bague de sertissage, non référencée, de la gaine de pression. En outre, une bague d'appui 50 géométriquement complémentaire de la bague de sertissage 48 est portée en applique contre elle. Elle présente, par exemple, un chanfrein arrière externe formant une rampe conique d'appui externe 52, opposée à la bague de sertissage 48 et une portée cylindrique d'appui avant 54 s'étendant en saillie de la paroi externe conique 42.

De plus, en arrière du manchon 30 et autour de la conduite flexible sous-marine 10, un collier de serrage 56, de préférence en plusieurs parties, vient maintenir les deux nappes d'armures 22, 24 concentriques. Le collier de serrage 56 présente, par exemple, un chanfrein avant interne formant une rampe conique d'appui interne 58, et un bord arrière 60 à proximité duquel s'étend axialement une canule 62 laquelle reçoit la gaine étanche de protection 28.

Ainsi, après avoir relié ensemble la structure tubulaire interne, c'est-à-dire la voûte de pression 20, la gaine étanche 18 et la carcasse 16, avec le manchon 30, sont installés la bague d'appui 50 et le collier de serrage 56. On vient ensuite conformer les armures 26 des deux nappes 22, 24.

Tout d'abord, on observera que durant le montage du manchon sur la structure tubulaire interne, les armures 26 des deux nappes 22, 24 ont été repliées vers l'arrière pour des raisons d'encombrement. Le repliement s'effectue en partie grâce au collier de serrage 56. La rampe conique d'appui interne 58 permet de replier vers l'arrière les armures 26 des deux nappes 22, 24. Ce repliement est de nature à générer des contraintes internes dans chacune des armures. Après que le montage a été réalisé, on vient alors rabattre ces armures 26 contre la bague d'appui 50 puis en les pliant sensiblement vers la paroi externe conique 42.

Chacune des armures 26 présente une extrémité d'armure libre 64. Les extrémités d'armure libres 64 viennent s'étendre sur la Figure 2, de façon schématique, à l'intérieur du logement 46. Toutefois, on prévoit de ménager des extrémités d'armure libre qui s'étendent axialement au moins en saillie de la structure tubulaire interne de manière à pouvoir les saisir chacune entre des mors non représentés. Autrement dit, les extrémités d'armure libre 64 sont plus longues que celles représentées sur la Figure 2.

Partant, dans une première phase on vient entraîner longitudinalement grâce à ces mors les extrémités d'armure libre de manière à mettre en tension les armures 26, selon une direction sensiblement parallèle à la paroi externe conique 42.

Considérant l'ensemble des armures de la conduite flexible sous-marine 10, pour une conduite de diamètre interne égale à 6", soit 15,24 cm, on exerce de préférence une tension longitudinale comprise entre 500 000 N et 17 500 000 N, soit sensiblement entre 50 t les 1750 t. En outre, pour des conduites flexibles dont le diamètre interne est compris entre 2", soit 5,08 cm et 20" soit 50,8 cm, la tension longitudinale à appliquer à l'ensemble des armures de la conduite est déterminée par proportionnalité et est fonction du diamètre et de la section totale des couches d'armures.

Avant la mise en tension les armures de traction 26 de la nappe externe 24 on met en tension les armures 26 de la nappe interne 22. Tout d'abord, on observera que les armures 26, du faite de leur enroulement hélicoïdal, sont sensiblement inclinées par rapport aux génératrices de la paroi externe conique 42. En outre, lorsque les armures 26 sont entraînées en translation, elles viennent prendre appui d'une part sur la bague d'appui 50 contre la rampe conique d'appui externe 52 et la portée cylindrique d'appui avant 54, directement pour la nappe 22 la plus interne ou indirectement pour la nappe 24 la plus externe, et d'autre part sur le collier de serrage 56, contre la rampe conique d'appui interne 58, directement pour la nappe 24 la plus externe et indirectement pour la nappe 22 plus interne. De la sorte, on vient exercer une tension longitudinale sur les armures 26 qui s'exercent sensiblement uniformément des extrémités d'armure libres 64 jusqu'au collier de serrage 56. De la sorte, on exerce une tension longitudinale sur les portions d'armure 26 ayant subi des contraintes durant la première partie du montage du manchon 30. La tension exercée sur les extrémités d'armure libres 64 se transmet bien évidemment dans la conduite flexible 10 au-delà du collier de serrage 56. Mais son intensité se dissipe avec la distance.

La tension longitudinale imprimée aux armures 26 engendre des contraintes qui se surajoutent aux contraintes résiduelles dues à la conformation initiale des armures. Les armures sont mises en tension à une valeur comprise entre 0,5 et 1,0 fois leur limite d'élasticité. De préférence, elles sont portées à une valeur de tension de relaxation optimale comprise entre 0,8 et 0,9 fois leur limite d'élasticité.

Ensuite, après une période de mise en tension donnée, comprise entre 5 secondes et 60 secondes, de préférence inférieure à 30 secondes, on relâche l'extrémité d'armure libre 64 et partant, on vient abaisser le niveau des contraintes résiduelles de l'armure. Conséquemment, l'armure présente une résistance en fatigue accrue. Considérant la mise en tension de l'ensemble des extrémités d'armures libres 64 des nappes interne et externe 22, 24, la période de mise en tension donnée est alors comprise entre 1 minute et 60 minutes, de préférence inférieure à 20 minutes. La durée de mise en tension des armures de traction dépend de la longueur de la conduite flexible sollicitée et de la valeur maximale de la tension à appliquer.

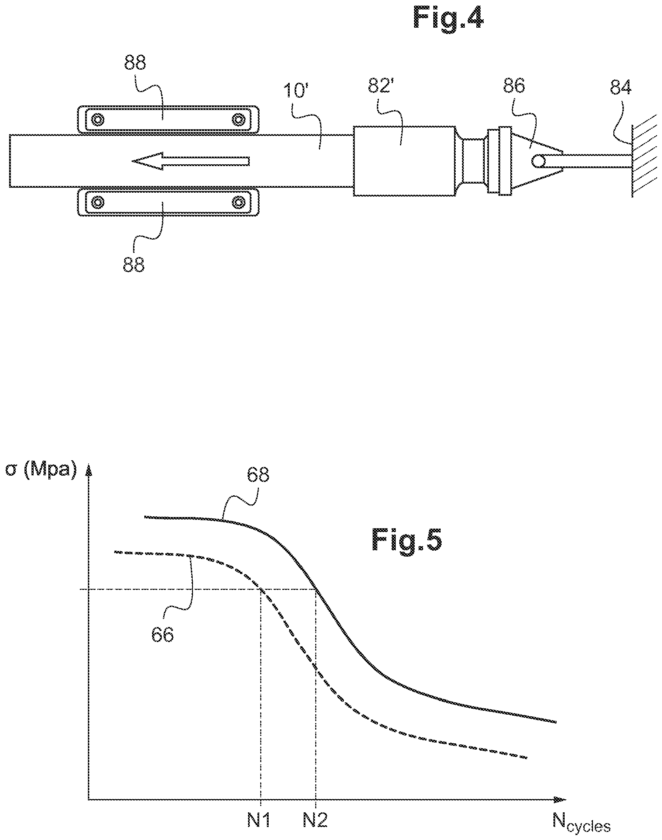

On pourra se référer au graphe illustré sur la Figure 5, montrant l'évolution de la résistance en traction des armures 26 en fonction du nombre de cycles de déformation qui leur est appliqué. La courbe inférieure 66 représente une armure n'ayant subi aucune mise en tension et où les contraintes résiduelles demeuraient à leur niveau initial, tandis que la courbe supérieure 68 représente l'évolution d'une armure ayant subi une mise en tension temporaire cyclique. On observe que les propriétés mécaniques de l'armure, en fatigue, sont accrues lorsque les contraintes résiduelles ont été partiellement atténuées grâce à une mise en tension temporaire.

On se référera à présent à la Figure 3 illustrant le parachèvement de la méthode de montage selon l'invention.

On retrouve sur cette Figure 3 le manchon 30, et la structure tubulaire interne, c'est-à-dire la voûte de pression 20, la gaine étanche 18 et la carcasse 16. On retrouve également le collier de serrage 56 et en vis-à-vis la bague de sertissage 48 laquelle a été débarrassée de la bague d'appui 50. Néanmoins, la bague d'appui 50 peut très bien rester à demeure autour des nappes d'armures 22, 24, si nécessaire. On observera que les extrémités d'armure libres 64 ont été recourbées vers l'arrière en formant crochet pour améliorer l'ancrage. Cette configuration n'est pas systématique et les extrémités libres 64 peuvent présenter une extrémité droite, tordue dite « twisted » en langue anglaise, ou encore ondulée, dite « wavy » en langue anglaise. En outre, le manchon 30 relié à la conduite flexible 10 a été engagé à l'intérieur d'un capot cylindrique 70 lequel présente une bordure d'appui avant interne 72 venant prendre appui sur la collerette 44 et une bordure d'appui arrière opposé 74 venant prendre appui sur la gaine étanche de protection 28 par l'intermédiaire d'un ensemble arrière d'étanchéité comprenant une bague de sertissage et une bride arrière. Ainsi le capot cylindrique 70 vient refermer le logement 46 pour former une chambre annulaire 76. La chambre annulaire s'étend ainsi axialement du collier de serrage 56 jusqu'à la collerette 44. De plus, le capot cylindrique 70 présente un orifice de remplissage 78 refermable par une vis d'obturation 80 ou par tout autre moyen susceptible de convenir. La chambre annulaire 76 est alors remplie d'une résine époxyde réactive initialement liquide et destinée à durcir. Partant, les armures 26 sont prisonnières de la chambre annulaire 76 et partant, sont solidement ancrées dans l'embout 82 formé par le manchon 30 engagé dans le capot cylindrique 70.

Selon un deuxième mode de mise en oeuvre de l'invention illustrée sur la Figure 4, on s'affranchit de la mise en tension longitudinale individuelle des armures telle que décrite ci-dessus en conservant toutes les autres étapes, jusqu'à l'ancrage des armures à l'intérieur de la chambre annulaire de l'embout. On retrouve ainsi sur cette Figure un embout 82' et une conduite flexible sous-marine 10'. L'embout est alors amarré à une structure fixe 84 par l'intermédiaire d'une tête de traction 86. Aussi, on met en oeuvre des trains de chenilles 88 autour de la conduite flexible 10'. Grâce à ces trains de chenilles 88 on exerce un effort isostatique selon une direction axiale de la conduite flexible 10', dans un sens opposé à l'embout 82' de manière à pouvoir mettre en tension sensiblement longitudinalement toutes les armures des nappes d'armures de la conduite flexible 10' aussi bien dans l'embout 82' qu'en longueur courante sur une distance de quelques mètres.

Ensuite, on relâche la conduite flexible 10', de manière à abaisser le niveau de contraintes résiduelles qui demeure dans les armures.

Ainsi, quel que soit le mode de mise en oeuvre de l'invention choisi, la méthode de montage de l'embout comprend une phase préliminaire de préparation de l'extrémité de la conduite flexible où l'on vient dégager la structure tubulaire interne de manière étagée pour pouvoir l'emmancher à l'intérieur du manchon. Dès après on vient conformer les armures de traction pour pouvoir venir les étendre autour du manchon et on engage le manchon à l'intérieur du capot cylindrique afin de pouvoir ensuite remplir la chambre annulaire ainsi formée avec une résine durcissable.

La mise en tension longitudinale des armures intervient, soit individuellement avant d'engager le manchon à l'intérieur du capot cylindrique, soit après que l'embout a été monté sur la conduite.

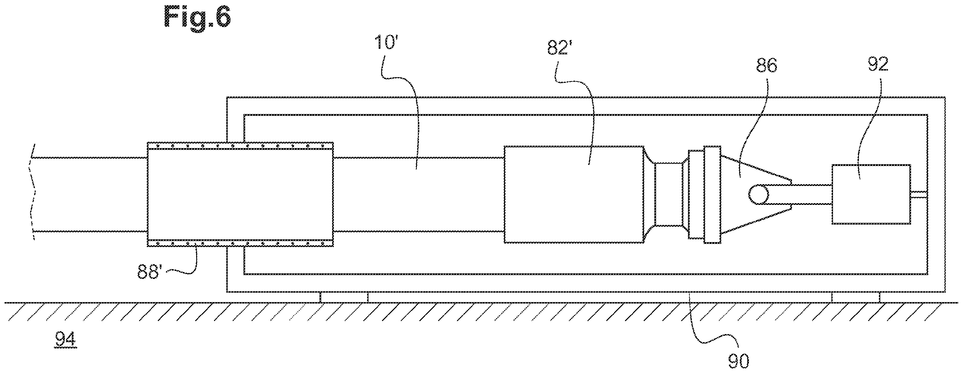

Selon une variante de réalisation d'un deuxième mode de mise en oeuvre de l'invention illustrée sur la Figure 6, la conduite flexible sous-marine 10' est mise en tension par l'intermédiaire d'un bâti 90 comportant une bride de serrage 88' et un piston 92. Le bâti 90 est, sur la Figure 6, fixé au sol 94 mais de préférence, le bâti 90 est mobile et peut être déplacé en fonction de l'emplacement de la conduite 10' sur laquelle un embout 82' vient d'être monté et/ou pour laquelle un test FAT défini dans le document normatif API 17J (Spécification for Unbonded Flexible Pipe), va être réalisé. Le bâti 90 ou banc mobile de traction est positionné de part et d'autre du corps de la conduite flexible 10', au niveau de son extrémité. De manière avantageuse, ledit banc peut comporter un capotage, non représenté, visant à protéger la longueur courante de ladite conduite 10'. La partie de la conduite 10' située à la suite de la longueur courante, non représentée, est par exemple enroulée sur une bobine de stockage ou à l'intérieur d'un panier de stockage.

Dans cette variante, on remplace les jeux de chenilles 88 mis en oeuvre selon la variante précédente par une bride de serrage 88'. La bride de serrage 88' est installée autour de la conduite 10', dans sa longueur courante, tandis que l'embout 82' est amarré au bâti par l'intermédiaire d'une tête de traction 86, elle-même reliée au piston 92.

La bride 88', reliée fixement au bâti 90, permet d'enserrer le corps de la conduite 10' et d'exercer sur celle-ci des efforts radiaux de serrage afin de la maintenir en position fixe par rapport audit bâti 90. Ladite bride de serrage 88' comporte des moyens élastiques d'accommodations, non représentés sur la Figure 6, permettant d'ajuster les variations de dimensions de la conduite 10'. En effet, le diamètre de la conduite à tendance à diminuer compte tenu de sa mise en tension axiale ainsi que des efforts radiaux engendrés par l'introduction d'un fluide sous pression à l'intérieur de la conduite, plus précisément dans l'espace annulaire défini par le volume situé entre la gaine étanche 18 et la gaine étanche de protection 28 lors d'un test FAT. Ladite bride mesure par exemple entre 1 mètre et 4 mètres. Un tel type de bride de serrage est notamment décrit dans les demandes de brevet WO 99/58889, WO 99/35429 et US 3,540,642. La bride de serrage 88' est en outre installée à proximité de l'embout 82', par exemple à une distance comprise entre 5 mètres et 20 mètres, de préférence entre 5 mètres et 10 mètres.

Ledit piston 92 est destiné à exercer un effort isostatique selon une direction axiale de la conduite flexible 10', par l'intermédiaire de la solidarisation des armures de traction 26 avec l'embout 82'. De la sorte, on met en tension sensiblement longitudinalement toutes les armures des nappes d'armures 22, 24 de la conduite flexible 10' aussi bien dans l'embout 82' qu'en longueur courante sur une distance de quelques mètres, de préférence quelques dizaines de mètres.

Et, de la même manière qu'expliquer ci-avant, après application d'une tension longitudinale donnée pendant une période de temps donnée de valeurs identiques à celles indiquées plus haut, on relâche ensuite la conduite flexible 10' de manière à abaisser le niveau de contraintes résiduelles qui demeure dans les armures 26. Ainsi, on améliore la résistance mécanique des armures de traction 26 au niveau de l'embout 82' et partant on augmente la durée de vie en service de la conduite flexible 10'.

## Revendications

1. Méthode de montage d'embout (82) de conduite flexible sous-marine (10), la méthode comprenant les étapes suivantes :
a) on fournit une conduite flexible sous-marine (10) comprenant une structure tubulaire interne (16, 18, 20) et une pluralité d'armures de traction (26) enroulées en hélice à pas long autour de ladite structure tubulaire interne (16, 18, 20), ladite structure tubulaire interne présentant une extrémité libre ;
b) on fournit un embout (82) comprenant un manchon (30) et un capot cylindrique (70) destiné à venir coiffer coaxialement ledit manchon (30) pour pouvoir ménager une chambre annulaire (76) entre ledit manchon (30) et ledit capot cylindrique (70) ;
c) on emmanche ladite extrémité libre de ladite structure tubulaire interne à l'intérieur dudit manchon (30), tandis qu'on conforme lesdites armures de traction (26) de manière à pouvoir venir les étendre autour dudit manchon ; et,
d) on coiffe ledit manchon (30) avec ledit capot cylindrique (70) pour pouvoir ancrer lesdites armures de traction à l'intérieur de ladite chambre annulaire (76) ;
**caractérisée en ce qu'**elle comprend en outre, après l'étape c), une double étape de mise en tension longitudinale et de relâchement desdites armures de traction (26).

2. Méthode de montage selon la revendication 1, **caractérisée en ce qu'**on met en oeuvre ladite double étape de mise en tension longitudinale et de relâchement, entre l'étape c) et l'étape d).

3. Méthode de montage selon la revendication 2, **caractérisée en ce que** lesdites armures de traction (26) présentent chacune une extrémité d'armure libre (64), et **en ce qu'**on saisit chacune des extrémités d'armure libres pour pouvoir mettre en tension longitudinale lesdites armures de traction (26).

4. Méthode de montage selon la revendication 3, **caractérisée en ce que** chacune desdites extrémités d'armure libres (64) s'étendant selon une direction axiale, en saillie de ladite extrémité libre de ladite structure tubulaire interne (16, 18, 20).

5. Méthode de montage selon la revendication 1, **caractérisée en ce qu'**on met en oeuvre ladite double étape de mise en tension longitudinale et de relâchement après l'étape d).

6. Méthode de montage selon la revendication 5, **caractérisée en ce qu'**on met en prise ladite conduite flexible sous-marine (10') et ledit embout (82') et **en ce qu'**on exerce des efforts selon une direction longitudinale et en sens opposés sur ladite conduite sous-marine (10') et sur ledit embout (82') pour pouvoir mettre en tension longitudinale lesdites armures de traction.

7. Méthode de montage selon la revendication 5 ou 6, **caractérisée en ce qu'**on met en outre un fluide sous pression à l'intérieur de ladite conduite flexible sous-marine (10').

8. Méthode de montage selon l'une quelconque des revendications 1 à 7, **caractérisée en ce qu'**on fournit en outre un collier de serrage (56), et **en ce qu'**on porte ledit collier de serrage autour de ladite pluralité d'armures de traction (22, 24) et en amont dudit manchon (30).

9. Méthode de montage selon l'une quelconque des revendications 1 à 8, **caractérisée en ce qu'**on fournit en outre une bague d'appui (50) et **en ce qu'**on monte ladite bague d'appui autour dudit manchon (30) pour pouvoir recevoir en appui les armures de traction (26) de ladite pluralité d'armures de traction.

10. Méthode de montage selon l'une quelconque des revendications 1 à 9, **caractérisée en ce qu'**on met en tension longitudinale les armures de traction (26) à une valeur de tension voisine de la limite d'élasticité des armures de traction.

## Patentansprüche

1. Verfahren zur Montage eines Endstücks (82) für flexible Unterwasser-Rohrleitung (10), wobei das Verfahren die folgenden Schritte umfasst:
a) Bereitstellen einer flexiblen Unterwasser-Rohrleitung (10), die eine innere rohrförmige Struktur (16, 18, 20) und eine Mehrzahl von Zugarmierungen (26) umfasst, die mit großer Gangart spiralförmig um die innere rohrförmige Struktur (16, 18, 20) gewickelt sind, wobei die innere rohrförmige Struktur ein freies Ende aufweist;
b) Bereitstellen eines Endstücks (82), das eine Hülse (30) und eine zylindrische Haube (70) umfasst, die dazu bestimmt ist, koaxial über die Hülse (30) gezogen zu werden, um eine ringförmige Kammer (76) zwischen der Hülse (30) und der zylindrischen Haube (70) bilden zu können;
c) Einschieben des freien Endes der inneren rohrförmigen Struktur in das Innere der Hülse (30), während die Zugarmierungen (26) so ausgebildet werden, dass sie um die Hülse herum gedehnt werden können; und,
d) Überziehen der Hülse (30) mit der zylindrischen Haube (70), um die Zugarmierungen im Inneren der ringförmigen Kammer (76) verankern zu können;
**dadurch gekennzeichnet, dass** es ferner, nach Schritt c), einen zweifachen Schritt des Unterspannungsetzens in Längsrichtung und des Entspannens der Zugarmierungen (26) umfasst.

2. Montageverfahren nach Anspruch 1, **dadurch gekennzeichnet, dass** der zweifache Schritt des Unterspannungsetzens in Längsrichtung und des Entspannens zwischen Schritt c) und Schritt d) durchgeführt wird.

3. Montageverfahren nach Anspruch 2, **dadurch gekennzeichnet, dass** die Zugarmierungen (26) jede ein freies Armierungsende (64) aufweisen und dass jedes der freien Armierungsenden ergriffen wird, um die Zugarmierungen (26) in Längsrichtung unter Spannung zu setzen.

4. Montageverfahren nach Anspruch 3, **dadurch gekennzeichnet, dass** jedes der freien Armierungsenden (64) sich in einer axialen Richtung, über das freie Ende der inneren rohrförmigen Struktur (16, 18, 20) vorspringend, erstreckt.

5. Montageverfahren nach Anspruch 1, **dadurch gekennzeichnet, dass** der zweifache Schritt des Unterspannungsetzens in Längsrichtung und des Entspannens nach Schritt d) durchgeführt wird.

6. Montageverfahren nach Anspruch 5, **dadurch gekennzeichnet, dass** die flexible Unterwasser-Rohrleitung (10') und das Endstück (82') in Eingriff gebracht werden und dass Kräfte in einer Längsrichtung und in entgegengesetzter Richtung auf die Unterwasser-Rohrleitung (10') und auf das Endstück (82') ausgeübt werden, um die Zugarmierungen in Längsrichtung unter Spannung zu setzen.

7. Montageverfahren nach Anspruch 5 oder 6, **dadurch gekennzeichnet, dass** ferner ein Fluid unter Druck in das Innere der flexiblen Unterwasser-Rohrleitung (10') eingebracht wird.

8. Montageverfahren nach einem der Ansprüche 1 bis 7, **dadurch gekennzeichnet, dass** ferner eine Klemmarmatur (56) bereitgestellt wird und dass die Klemmarmatur um die Mehrzahl von Zugarmierungen (22, 24) herum und stromaufwärts der Hülse (30) gebracht wird.

9. Montageverfahren nach einem der Ansprüche 1 bis 8, **dadurch gekennzeichnet, dass** ferner ein Stützring (50) bereitgestellt wird und dass der Stützring um die Hülse (30) herum montiert wird, um die Zugarmierungen (26) der Mehrzahl von Zugarmierungen in Abstützung aufnehmen zu können.

10. Montageverfahren nach einem der Ansprüche 1 bis 9, **dadurch gekennzeichnet, dass** die Zugarmierungen (26) in Längsrichtung auf einen Spannungswert unter Spannung gesetzt werden, der nahe der Elastizitätsgrenze der Zugarmierungen liegt.

## Claims

1. A method for fitting an end-fitting (82) of an underwater flexible pipe (10), the method comprising the following steps:
a) a flexible pipe (10) is procured which comprises a tubular internal structure (16, 18, 20) and a plurality of tensile armor wires (26) wound in a helix with a long lay around said tubular internal structure (16, 18, 20), said tubular internal structure having a free end;
b) an end-fitting (82) is procured which comprises a sleeve (30) and a cylindrical cap (70) that coaxially caps said sleeve (30) in order to be able to create an annular space (76) between said sleeve (30) and said cylindrical cap (70);
c) said free end of said tubular internal structure is push-fitted into said sleeve (30) and said tensile armor wires (26) are conformed so that they can extend around said sleeve; and
d) said sleeve (30) is capped by said cylindrical cap (70) so as to be able to anchor said tensile armor wires inside said annular space (76),
**characterized in that** it further comprises, after the step c), a two-part step of longitudinally tensioning and then releasing said tensile armor wires (26).

2. The fitting method as claimed in claim 1 **characterized in that** said two-part step of longitudinal tensioning and then releasing is executed between the step c) and the step d).

3. The fitting method as claimed in claim 2 **characterized in that** each tensile armor wire (26) has an armor wire free end (64) and **in that** each of the armor wire free ends is grasped in order to be able to tension said tensile armor wires (26) longitudinally.

4. The fitting method as claimed in claim 3 **characterized in that** each of said armor wire free ends (64) extends in an axial direction, projecting from said free end of said tubular internal structure (16, 18, 20).

5. The fitting method as claimed in claim 1 **characterized in that** said two-part step of longitudinal tensioning and then releasing is effected after the step d).

6. The fitting method as claimed in claim 5 **characterized in that** said underwater flexible pipe (10') and said end fitting (82') are interengaged and **in that** forces are exerted in opposite longitudinal directions on said underwater pipe (10') and on said end fitting (82') in order to be able to tension said tensile armor wires longitudinally.

7. The fitting method as claimed in claim 5 or 6 **characterized in that** a fluid under pressure is pressurized inside said underwater flexible pipe (10').

8. The fitting method as claimed in any one of claims 1 to 7 **characterized in that** there is further procured a clamp (56) and **in that** said clamp is placed around said plurality of tensile armor layers (22, 24) on the upstream side of said sleeve (30).

9. The fitting method as claimed in any one of claims 1 to 8 **characterized in that** a bearing ring (50) is further procured and **in that** said bearing ring is fitted around said sleeve (30) so as to be able to receive in bearing interengagement the tensile armor wires (26) of said plurality of tensile armor layers.

10. The fitting method as claimed in any one of claims 1 to 9 **characterized in that** the tensile armor wires (26) are longitudinally tensioned to a tension value close to the yield strength of the tensile armor wires.
